# EUROPEAN PATENT APPLICATION

(11) **EP 4 559 645 A1**
(43) Date of publication of application: **28.05.2025**
(21) Application number: 23842663.9
(22) Date of filing: 11.05.2023
(51) Int. Cl.: B26F 1/44, B26D 7/18, B26F 1/38, H01G 11/86, H01G 13/00, H01M 4/04, H01M 4/139

(54) **MOLDING DEVICE AND MOLDING METHOD FOR MIXTURE SHEET**

(30) Priority: 19.07.2022 JP 2022114706
(71) Applicant: Panasonic Intellectual Property Management Co., Ltd., Kadoma-shi, Osaka 571-0057 (JP)
(72) Inventor: FUKUMOTO, Yusuke, Kadoma-shi, Osaka 571-0057 (JP); TSURUTA, Yuki, Kadoma-shi, Osaka 571-0057 (JP); TANI, Hitoshi, Kadoma-shi, Osaka 571-0057 (JP); MAEDA, Satoru, Kadoma-shi, Osaka 571-0057 (JP)
(74) Representative: Eisenführ Speiser
(86) International application number: PCT/JP2023/017780
(87) International publication number: WO 2024/018731

(57) **Abstract**

This molding device 1 for a mixture sheet 6 comprises: a support roll 2 which supports, on a circumferential surface 2a thereof, the mixture sheet 6 constituted by a dry electrode mixture; and a molding roll 4 which rotates together with the support roll 2 and has , on a circumferential surface 4a thereof, a frame-like cutting jig 8 and a removal pad 10 disposed inside a frame of the cutting jig 8, the circumferential surface 4a facing, at a predetermined distance, the circumferential surface 2a of the support roll 2. The molding roll 4 pushes the cutting jig 8 against the mixture sheet 6 to partially cut the mixture sheet 6, and attaches a cut part 6a to the surface of the removal pad 10 to pull and separate the cut part from the mixture sheet 6.

## Description

### TECHNICAL FIELD

The present disclosure relates to a molding apparatus and a molding method for a compound sheet.

### BACKGROUND ART

Patent Literature 1 describes an apparatus that supplies granules to a gap between a pair of compression rolls, compresses them into a sheet to form a coating film, and layers the coating film on a substrate. This apparatus is equipped with a stepped roll with a blade provided on the circumferential surface, and a portion of the coating film is removed by the stepped roll. Patent Literature 1 also describes using this apparatus to manufacture a functional sheet used in a power storage apparatus such as a secondary battery and a capacitor. Further, a current collector plate is given as an example of the substrate, and an electrode compound is given as an example of the paint.

### RELATED-ART LITERATURE

### PATENT LITERATURE

Patent Literature 1: JP2013-017962

### SUMMARY OF INVENTION

### TECHNICAL PROBLEM

In the case an electrode sheet is manufactured by layering an electrode compound sheet on a current collector plate using the above-described apparatus, an exposed portion of the current collector plate can be formed by removing a portion of the electrode compound sheet. The exposed portion can be used as, for example, a portion of connection to a current collection lead.

There is always a demand for higher capacity of storage apparatuses. As a result of an intensive study, we have come to recognize that there is room for improvement in conventional apparatuses to increase the capacity of power storage apparatuses.

The present disclosure addresses the issue described above, and a purpose thereof is to provide a technology of increasing the capacity of a power storage apparatus.

### SOLUTION TO PROBLEM

One embodiment of the present disclosure relates to an apparatus for a compound sheet. The apparatus includes: a support roll that supports a compound sheet comprised of a dry electrode compound on a circumferential surface of the support roll; and a molding roll that includes, on a circumferential surface of the molding roll, a cutting jig having a frame shape and a removal pad disposed in a frame of the cutting jig and rotates together with the support roll, the circumferential surface of the molding roll facing the circumferential surface of the support roll at a predetermined interval. The molding roll presses the cutting jig against the compound sheet to cut the compound sheet partially and attaches a cut portion to a surface of the removal pad to remove the cut portion away from the compound sheet.

Another embodiment of the present disclosure relates to a method of molding a compound sheet. The method includes: supporting a compound sheet comprised of a dry electrode compound on a circumferential surface of a support roll; rotating a molding roll together with the support roll, the molding roll including, on a circumferential surface of the molding roll, a cutting jig having a frame shape and a removal pad disposed in a frame of the cutting jig, and the circumferential surface of the molding roll facing the circumferential surface of the support roll at a predetermined interval; and pressing the cutting jig against the compound sheet to cut the compound sheet partially and attaching a cut portion to a surface of the removal pad to remove the cut portion away from the compound sheet.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the capacity of a power storage apparatus can be increased.

### BRIEF DESCRIPTION OF DRAWINGS

[Fig. 1] Fig. 1 is a schematic diagram showing a molding apparatus for a compound sheet according to an embodiment.
[Fig. 2] Fig. 2 is an exploded perspective view of the molding unit.
[Fig. 3] Fig. 3 is a cross-sectional view of the molding unit.
[Fig. 4] Fig. 4A is a plan view of an electrode sheet. Fig. 4B is a cross-sectional view along A-A line of Fig. 4A.
[Fig. 5] Fig. 5A is a plan view of the electrode sheet to which a current collection lead is bonded. Fig. 5B is an enlarged cross-sectional view of the window portion.

### DESCRIPTION OF EMBODIMENTS

Hereinafter, the present disclosure will be described based on preferred embodiments with reference to the accompanying drawings. The embodiments are not intended to limit the scope of the present disclosure but exemplify the present disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

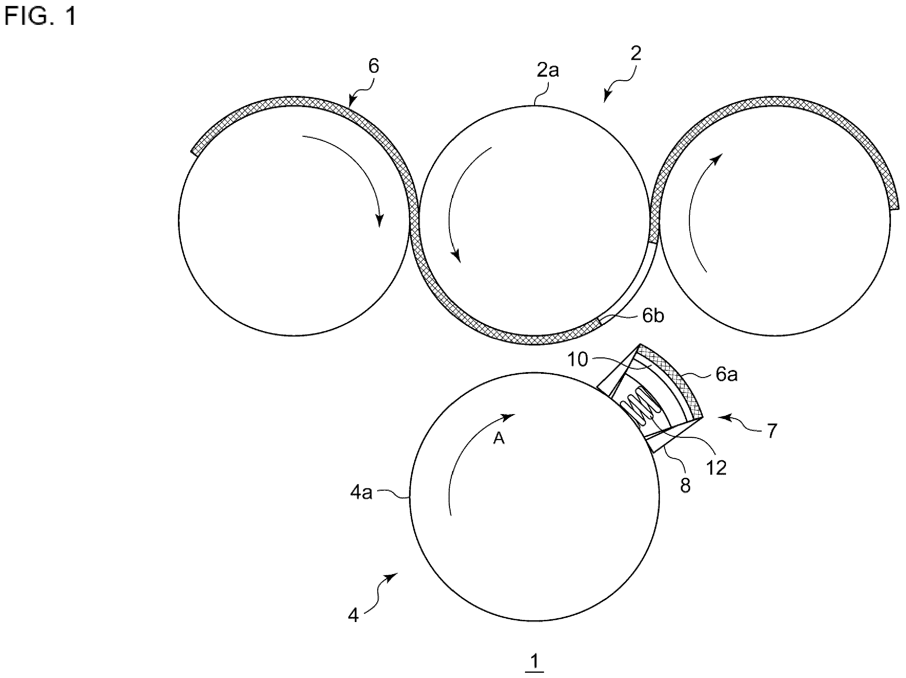

Fig. 1 is a schematic diagram showing a molding apparatus 1 for a compound sheet 6 according to an embodiment. The molding apparatus 1 for the compound sheet 6 includes a support roll 2 and a molding roll 4. The support roll 2 supports the compound sheet 6 on a circumferential surface 2a. The compound sheet 6 according to one example is a strip elongated in the conveying direction and is layered on a current collector plate and then turned into individual pieces of electrode plates, which are used in a power storage apparatus such as a secondary battery and a capacitor. The compound sheet 6 is, for example, formed as follows. That is, granules of a dry electrode compound that serve as a raw material of the compound sheet 6 are supplied from a known reservoir such as a hopper to a gap between a pair of compression rolls. The pair of compression rolls rotate in mutually opposite directions to compress the dry electrode compound supplied to the gap into a sheet. Thereby, the compound sheet 6 is formed.

The compound sheet 6 is continuously fed from the gap between the pair of compressed rolls. The support roll 2 is located on the downstream side of the pair of compression rolls and conveys the compound sheet 6 to the downstream side by its own rotation while supporting the compound sheet 6 on the circumferential surface 2a. The compound sheet 6 may be stretched until it reaches a target thickness in the process of conveyance.

The dry electrode compound includes an electrode active material and, if necessary, a conductive agent and a binder. In the case of a general lithium ion secondary battery, the electrode active material is lithium cobalt oxide, lithium iron phosphate, etc. when it is a positive electrode and is graphite etc. when it is a negative electrode. The conductive agent is graphite, carbon black, acetylene black, etc. The binder is polytetrafluoroethylene (PTFE), polyvinylidene fluoride (PVdF), etc. Further, the dry electrode compound has a solvent content of 5% by mass or less, 3% by mass or less, or even 0% by mass with respect to the total mass of the dry electrode compound. Therefore, a drying furnace for drying the compound sheet 6 can be omitted. The dry electrode compound may contain a very small amount of solvent to the extent that a drying furnace can be omitted.

The posture of the molding roll 4 is defined so that the rotation axis thereof is parallel to the rotation axis of the support roll 2. A circumferential surface 4a faces the circumferential surface 2a of the support roll 2 at a predetermined interval. Further, the molding roll 4 rotates together with the support roll 2. The support roll 2 and the molding rolls 4 rotate in mutually opposite directions. By way of one example, the support roll 2 and the molding roll 4 rotate at the same rotation speed.

The molding roll 4 includes a molding unit 7 comprised of a cutting jig 8, a removal pad 10, and an elastic body 12 on the circumferential surface 4a. The molding roll 4 rotates together with the support roll 2 and presses the cutting jig 8 against the compound sheet 6 supported by the support roll 2. Thereby, the compound sheet 6 is cut partially. Then, the molding roll 4 attaches a cut portion 6a of the compound sheet 6 to the surface of the removal pad 10 to remove the cut portion 6a away from the compound sheet 6. As the cut portion 6a is removed, a through hole that extends through the compound sheet 6 in the thickness direction is formed in the compound sheet 6. The through hole constitutes a window portion 6b.

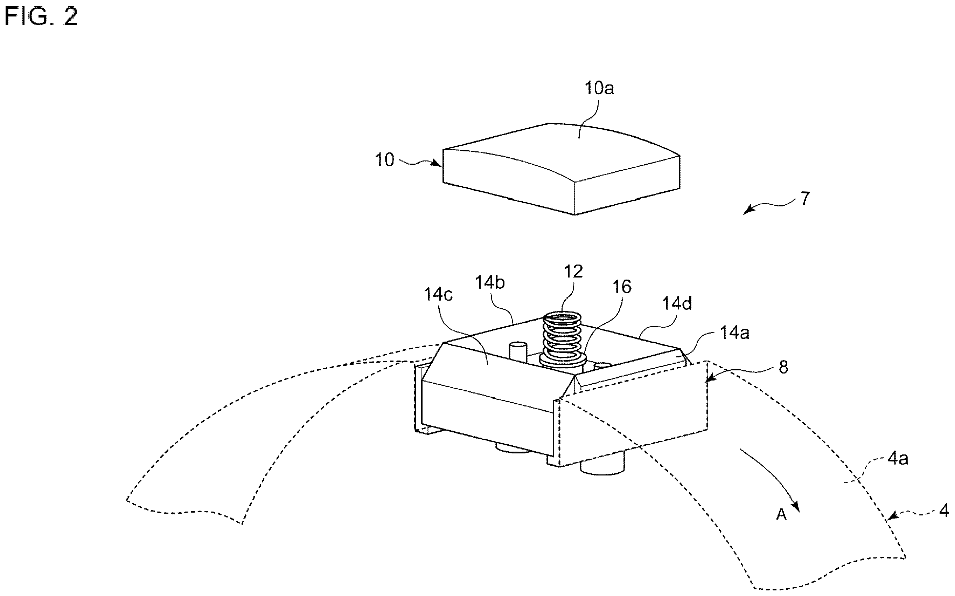

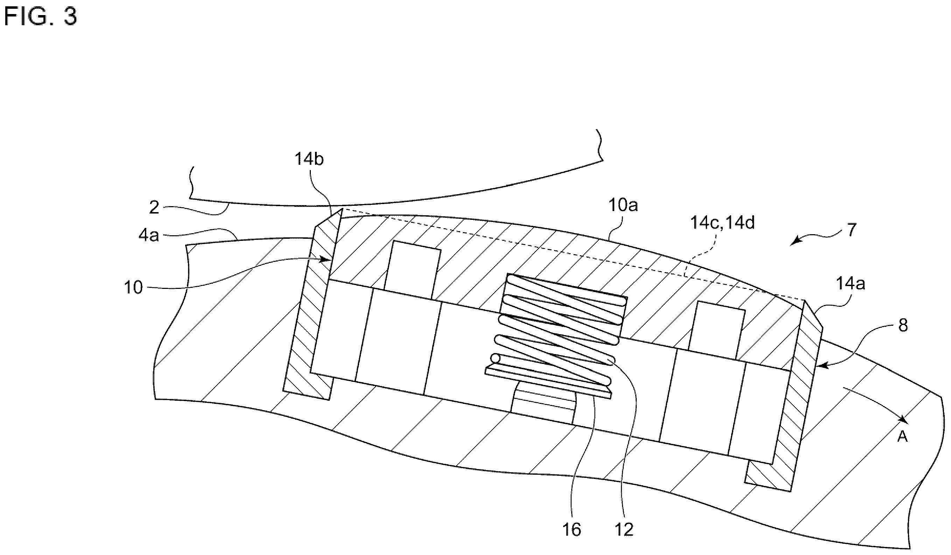

Fig. 2 is an exploded perspective view of the molding unit 7. Fig. 3 is a cross-sectional view of the molding unit 7. In Fig. 3, illustration of the compound sheet 6 is omitted. As shown in Fig. 2, the cutting jig 8 has a frame shape. The cutting jig 8 of this embodiment is shaped in a rectangular frame and has a first cutting blade 14a-a fourth cutting blade 14d combined in a rectangular form. The first cutting blade 14a and the second cutting blade 14b are arranged at a predetermined interval in the circumferential direction of the molding roll 4 and extend in the axial direction of the molding roll 4. In the rotation direction A of the molding roll 4, the first cutting blade 14a is located on the side of the front end, and the second cutting blade 14b is located on the side of the back end. The third cutting blade 14c and the fourth cutting blade 14d are arranged at a predetermined interval in the axial direction of the molding roll 4 and extend in the circumferential direction of the molding roll 4. The cutting edges of the first cutting blade 14a and the second cutting blade 14b extend in a straight line. The cutting edges of the third cutting blade 14c and the fourth cutting blade 14d extend in a curved shape parallel to the circumferential surface 4a. Each blade faces outward in the radial direction of the molding roll 4. The cutting jig 8 may have a frame shape such as a rectangle with rounded corners, a perfect circle, and an ellipse.

The removal pad 10 is disposed in the frame of the cutting jig 8. Therefore, the removal pad 10 is surrounded by the first cutting blade 14a-the fourth cutting blade 14d as viewed in the radial direction of the molding roll 4. A surface 10a facing the support roll 2 of the removal pad 10 has a greater surface roughness than the circumferential surface 2a of the support roll 2. For example, the arithmetic average roughness Ra of the surface 10a is greater than the arithmetic average roughness Ra of the circumferential surface 2a. The surface roughness of the surface 10a can be increased by a known roughening process such as sandblasting.

The elastic body 12 supports the removal pad 10. The elastic body 12 can be comprised of a known spring, sponge, etc. The elastic body 12 of this embodiment is comprised of a coil spring by way of one example and is disposed between the cutting jig 8 and the removal pad 10. The cutting jig 8 has a pedestal 16 in the frame. The end of the elastic body 12 toward the cutting jig 8 is fixed to the pedestal 16. The end of the elastic body 12 toward the removal pad 10 is fixed to the back surface of the removal pad 10. In a state where the removal pad 10 is facing the support roll 2, the elastic body 12 biases the removal pad 10 toward the cut portion 6a by its own elastic force. Further, when the removal pad 10 is isolated from the support roll 2 by the rotation of the support roll 2 and the molding roll 4, the elastic body 12 pulls the removal pad 10 toward the molding roll 4 by its own elastic force. The elastic body 12 functions in the same way as the die spring of a punching die. The removal pad 10 itself may have elasticity. In this case, the removal pad 10 also serves as the elastic body 12.

As shown in Fig. 3, the front end of the cutting jig 8 in the rotation direction A of the molding roll 4 protrudes more toward the support roll 2 than the front end of the removal pad 10. Further, the back end of the cutting jig 8 in the rotation direction A protrudes more toward the support roll 2 than the back end of the removal pad 10. That is, the cutting edges of the first cutting blade 14a and the second cutting blade 14b protrude more toward the support roll 2 than the surface 10a of the removal pad 10. Meanwhile, the middle portion of the removal pad 10 in the rotation direction A protrudes more toward the support roll 2 than the middle portion of the cutting jig 8. That is, the surface 10a of the removal pad 10 protrudes more toward the support roll 2 than the third cutting blade 14c and the fourth cutting blade 14d in at least a partial area including the midpoint of the removal pad 10 in the rotation direction A. By way of one example, the surface 10a of the removal pad 10 has a curved surface shape having a greater curvature than the circumferential surface 4a of the molding roll 4.

The molding unit 7 approaches the circumferential surface 2a of the support roll 2 in association with the rotation of the molding roll 4. First, the first cutting blade 14a is pressed against the compound sheet 6. Since the cutting jig 8 protrudes more than the removal pad 10 at the front end in the rotation direction A, the first cutting blade 14a can be applied to the compound sheet 6 more reliably than otherwise. As the first cutting blade 14a cuts the compound sheet 6, a starting point of the cut portion 6a is formed.

As the molding roll 4 rotates further, the surface 10a of the removal pad 10 comes into contact with the compound sheet 6, and the surface 10a is pressed against the compound sheet 6 by a biasing force applied by the elastic body 12. Further, the removal pad 10 receives the reaction force of the compound sheet 6 and sinks into the frame of the cutting jig 8. Thereby, the third cutting blade 14c and the fourth cutting blade 14d are pressed against the compound sheet 6. As the third cutting blade 14c and the fourth cutting blade 14d cut the compound sheet 6, the cut portion 6a extends backward in the rotation direction A.

The cut portion 6a is transferred to the surface 10a of the removal pad 10, starting on the side of the front end in the rotation direction A. By configuring the surface roughness of the surface 10a of the removal pad 10 to be greater than the surface roughness of the circumferential surface 2a of the support roll 2, it is possible to facilitate transfer of the cut portion 6a to the removal pad 10. Pressing the surface 10a against the cut portion 6a using the elastic body 12 also facilitates transfer of the cut portion 6a to the removal pad 10.

As the molding roll 4 rotates further, the second cutting blade 14b is pressed against the compound sheet 6. Since the cutting jig 8 protrudes more than the removal pad 10 at the back end in the rotation direction A, the second cutting blade 14b can be applied to the compound sheet 6 more reliably than otherwise. As the second cutting blade 14b cuts the compound sheet 6, an end point of the cut portion 6a is formed. As a result, the cut portion 6a has a rectangular shape.

As the molding roll 4 rotates further, the removal pad 10 is isolated from the circumferential surface 2a of the support roll 2. This causes the cut portion 6a transferred to the removal pad 10 to be removed from the compound sheet 6. As the removal pad 10 is isolated from the circumferential surface 2a, the removal pad 10 is pulled toward the support roll 2 via the cut portion 6a. However, the removal pad 10 is pulled toward the molding roll 4 with a force stronger than the force exerted by the elastic body 12 to pull the removal pad 10 toward the support roll 2. This causes the cut portion 6a to be separated from the compound sheet 6 more reliably than otherwise.

The cutting jig 8 is fixed to the molding roll 4. Therefore, the structure of the molding unit 7 can be simplified compared with a structure in which the cutting jig 8 is displaced in the radial direction of the molding roll 4. It also makes maintenance of the molding roll 4 easy. In further accordance with this embodiment, the window portion 6b is formed before the compound sheet 6 is layered on the current collector plate. This makes it possible to avoid that the current collector plate from being cut out by the cutting jig 8. Therefore, the quality of the power storage apparatus can be improved.

The cut portion 6a isolated from the compound sheet 6 is peeled off and removed from the removal pad 10 at a predetermined location by a peeling mechanism (not shown). The molding unit 7 from which the cut portion 6a has been removed advances again to a position facing the support roll 2 by the rotation of the molding roll 4 and is used to cut the compound sheet 6. Thereby, a plurality of window portions 6b arranged at predetermined intervals in the conveying direction are formed in the compound sheet 6. By way of one example, each window portion 6b is disposed at the center of the compound sheet 6 in the width direction (the direction perpendicular to the conveying direction).

The molding roll 4 shown in Fig. 1 has only one molding unit 7, but the number of molding units 7 is not limited to one. The molding roll 4 may have a plurality of molding units 7 depending on the interval of the window portions 6b formed in the compound sheet 6. Further, the interval of the window portions 6b may be adjusted by the interval of the plurality of molding units 7 or may be adjusted by the radius of the molding roll 4.

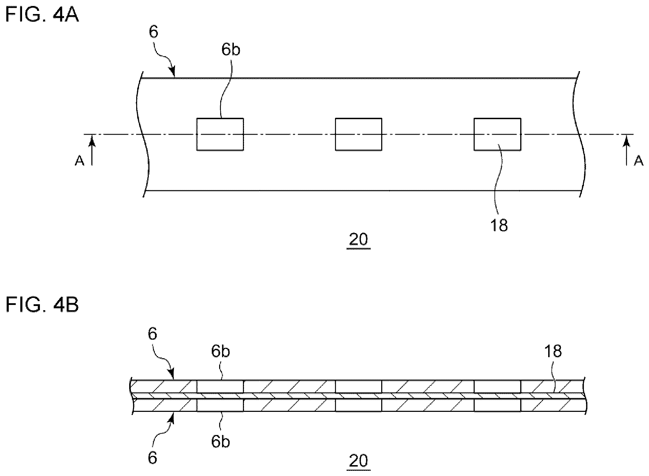

Fig. 4A is a plan view of an electrode sheet 20. Fig. 4B is a cross-sectional view along A-A line of Fig. 4A. The compound sheet 6 having the window portion 6b is conveyed to the downstream side by the support roll 2. The compound sheet 6 is layered on the surface of a current collector plate 18, and the electrode sheet 20 is obtained. The electrode sheet 20 is a continuous body of a plurality of dry electrode plates. By way of one example, the compound sheet 6 is layered on both surfaces of the current collector plate 18. In the case of a general lithium ion secondary battery, the current collector plate 18 is comprised of an aluminum foil, etc. when it is a positive electrode and is comprised of a copper foil, etc. when it is a negative electrode. The current collector plate 18 is exposed in the window portion 6b.

Each window portion 6b is surrounded by the dry electrode compound over the entire circumference. Therefore, the current collector plate 18 is exposed in a spot shape. In the conventional electrode sheet, the exposed portion of the current collector plate 18, i.e. the portion not coated with the electrode compound, extends over the entirety of the electrode sheet in the width direction. In the electrode sheet 20 of this embodiment, on the other hand, the exposed portion of the current collector plate 18 extends only in a portion of the electrode sheet 20 in the width direction. This can increase the amount of dry electrode compound in each electrode plate. Accordingly, it is possible to increase the capacity of the power storage apparatus. Further, the exposed portion of the current collector plate 18 can be reduced so that the safety of the power storage apparatus can be enhanced.

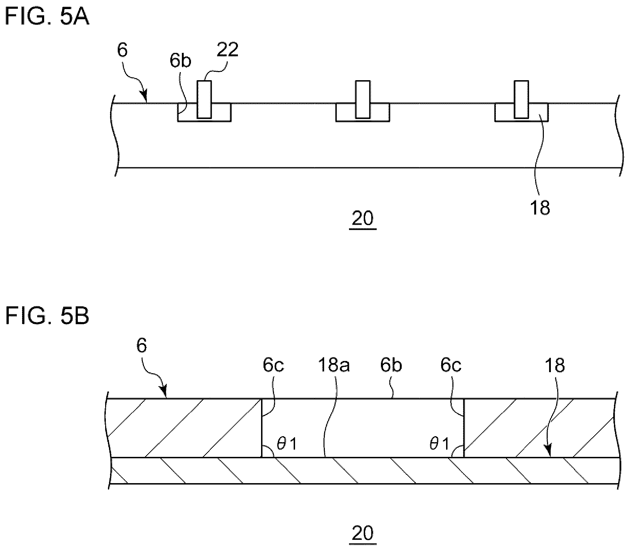

Fig. 5A is a plan view of the electrode sheet 20 to which a current collection lead 22 is bonded. Fig. 5B is an enlarged cross-sectional view of the window portion 6b. The cross-section shown in Fig. 5B is a cross-section perpendicular to the direction of extension of the current collector plate 18 and the compound sheet 6 in the electrode sheet 20 and, in other words, a cross-section parallel to the normal of the current collector plate 18 and the compound sheet **6.** Further, illustration of one of the compound sheet 6 is omitted in Fig. 5B.

By way of one example, the electrode sheet 20 is cut in the middle in the width direction and divided into two as shown in Fig. 5A. This also divides each window unit 6b into two. As a result, each rectangular window portion 6b will be surrounded on three sides by the dry electrode compound. Then, the current collection lead 22 (the current collector tab) is bonded by welding, etc. to the portion in the current collector plate 18 exposed from each divided window portion 6b. The exposed portion of the current collector plate 18 to which the current collection lead 22 is bonded is covered with an insulating protective tape (not shown). Thereafter, the electrode sheet 20 is cut between adjacent current collection leads 22 and turned into a plurality of individual pieces of dry electrode plates.

As shown in Fig. 5B, an angle θ1 formed by a side wall 6c (the side surface connecting the two main surfaces) of the compound sheet 6 in the window portion 6b and a surface 18a of the current collector plate 18 is 75° or more and 105° or less in a cross-section perpendicular to the direction of extension of the current collector plate 18 and the compound sheet 6. Preferably, the angle θ1 is 75°-105° over the entire circumference of the window portion 6b. Preferably, the angle θ1 is 85° or more and 95° or less. By setting the angle θ1 formed by the side wall 6c and the surface 18a of the current collector plate 18 to be 75° or more and 105° or less, i.e. an almost right angle, it is easy to suppress a connection failure of the current collector plate 18 and the current collection lead 22 due to interference of the dry electrode compound. It also makes it easier to suppress contact between the current collection lead 22 and the dry electrode compound. Consequently, the quality of the power storage apparatus can be improved. When the portion not coated with the dry electrode compound becomes spot-shaped, in particular, the work of bonding the current collection lead 22 becomes difficult. Therefore, it is easier to exhibit the effect of improving the quality of the power storage apparatus by making the angle θ1 to be an almost right angle.

Further, in the case the compound sheet is comprised of a wet electrode compound, the boundary between the portion not coated with the wet electrode compound and the coated portion may be distorted due to dripping of the wet electrode compound. Also, when the wet electrode compound is intermittently applied to form an uncoated portion, the edge of the coated portion may become jagged. In this case, the separator may be damaged when the electrode plate repeatedly expands and contracts due to charging and discharging of the power storage apparatus. A damage to the separator can cause an internal short circuit.

In this embodiment, on the other hand, the compound sheet 6 comprised of the dry electrode compound is cut with the cutting jig 8 to form the window portion 6b. For this reason, the boundary between the portion not coated with the dry electrode compound and the coated portion is difficult to distort, and the angle θ1 described above can be maintained at an almost right angle. Further, the edge of the coated portion will be straight, conforming to the shape of the cutting blade. For this reason, a damage to the separator can also be suppressed. Further, since the window portion 6b is formed by cutting with the cutting jig 8, it is possible to suppress bulging of the edge of the coated portion in the direction of thickness of the compound sheet 6. This can also suppress a damage to the separator as the electrode plate repeatedly expands and contracts due to charging and discharging of the power storage apparatus.

Embodiments of the present disclosure have been described above in detail. The embodiments described above are merely specific examples of practicing the present disclosure. The details of the embodiment shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiments by using phrases such as "of this embodiment" and "in this embodiment", details not referred to as such are also subject to design modification. Any combination of constituting elements included in the embodiment is also useful as an embodiment of the present disclosure. Hatching in the cross section in the drawings should not be construed as limiting the material of the hatched object.

The embodiment may be defined by the following items.
[Item 1] A molding apparatus (1) for a compound sheet (6), including: a support roll (2) that supports a compound sheet (6) comprised of a dry electrode compound on a circumferential surface (2a) of the support roll (2); and
   a molding roll (4) that includes, on a circumferential surface (4a) of the molding roll (4), a cutting jig (8) having a frame shape and a removal pad (10) disposed in a frame of the cutting jig (8) and rotates together with the support roll (2), the circumferential surface (4a) of the molding roll (4) facing the circumferential surface (2a) of the support roll (2) at a predetermined interval,
   wherein the molding roll (4) presses the cutting jig (8) against the compound sheet (6) to cut the compound sheet (6) partially and attaches a cut portion (6a) to a surface (10a) of the removal pad (10) to remove the cut portion (6a) away from the compound sheet (6).
[Item 2] The molding apparatus (1) according to Item 1,
   wherein the surface (10a) of the removal pad (10) has a greater surface roughness than the circumferential surface (2a) of the support roll (2).
[Item 3] The molding apparatus (1) according to Item 1 or Item 2,
   wherein the molding roll (4) has an elastic body (12) that supports the removal pad (10).
[Item 4] The molding apparatus (1) according to any one of Item 1 to Item 3,
   wherein a front end of the cutting jig (8) in a rotation direction (A) of the molding roll (4) protrudes more toward the support roll (2) than a front end of the removal pad (10),
   wherein a back end of the cutting jig (8) in the rotation direction (A) protrudes more toward the support roll (2) than a back end of the removal pad (10), and
   wherein a middle portion of the removal pad (10) in the rotation direction (A) protrudes more toward the support roll (2) than a middle portion of the cutting jig (8).
[Item 5] A method of molding a compound sheet (6), including:
   supporting a compound sheet (6) comprised of a dry electrode compound on a circumferential surface (2a) of a support roll (2);
   rotating a molding roll (4) together with the support roll (2), the molding roll (4) including, on a circumferential surface (4a) of the molding roll (4), a cutting jig (8) having a frame shape and a removal pad (10) disposed in a frame of the cutting jig (8), and the circumferential surface (4a) of the molding roll (4) facing the circumferential surface (2a) of the support roll (2) at a predetermined interval; and
   pressing the cutting jig (8) against the compound sheet (6) to cut the compound sheet (6) partially and attaching a cut portion (6a) to a surface (10a) of the removal pad (10) to remove the cut portion (6a) away from the compound sheet (6).
[Item 6] An electrode sheet (20) including a current collector plate (18) and a compound sheet (6) comprised of a dry electrode compound and layered on a surface of the current collector plate (18),
   wherein the compound sheet (6) includes a window portion (6b) surrounded by the dry electrode compound over an entire circumference, and the current collector plate (18) is exposed in the window portion (6b), and
   wherein an angle (θ1) formed by a side wall (6c) of the compound sheet (6) in the window portion (6b) and a surface (18a) of the current collector plate (18) is 75° or more and 105° or less in a cross-section perpendicular to a direction of extension of the current collector plate (18) and the compound sheet (6).

### INDUSTRIAL APPLICABILITY

The present disclosure can be used in a molding apparatus and a molding method for a compound sheet.

### REFERENCE SIGNS LIST

1 molding apparatus, 2 support roll, 4 molding roll, 6 compound sheet, 6a cut portion, 6b window portion, 6c side wall, 8 cutting jig, 10 removal pad, 12 elastic body, 18 current collector plate, 20 electrode sheet

## Claims

1. A molding apparatus for a compound sheet, comprising:
a support roll that supports a compound sheet comprised of a dry electrode compound on a circumferential surface of the support roll; and
a molding roll that includes, on a circumferential surface of the molding roll, a cutting jig having a frame shape and a removal pad disposed in a frame of the cutting jig and rotates together with the support roll, the circumferential surface of the molding roll facing the circumferential surface of the support roll at a predetermined interval,
wherein the molding roll presses the cutting jig against the compound sheet to cut the compound sheet partially and attaches a cut portion to a surface of the removal pad to remove the cut portion away from the compound sheet.

2. The molding apparatus according to Claim 1,
wherein the surface of the removal pad has a greater surface roughness than the circumferential surface of the support roll.

3. The molding apparatus according to Claim 1 or 2,
wherein the molding roll has an elastic body that supports the removal pad.

4. The molding apparatus according to Claim 1 or 2,
wherein a front end of the cutting jig in a rotation direction of the molding roll protrudes more toward the support roll than a front end of the removal pad,
wherein a back end of the cutting jig in the rotation direction protrudes more toward the support roll than a back end of the removal pad, and
wherein a middle portion of the removal pad in the rotation direction protrudes more toward the support roll than a middle portion of the cutting jig.

5. A method of molding a compound sheet, comprising:
supporting a compound sheet comprised of a dry electrode compound on a circumferential surface of a support roll;
rotating a molding roll together with the support roll, the molding roll including, on a circumferential surface of the molding roll, a cutting jig having a frame shape and a removal pad disposed in a frame of the cutting jig, and the circumferential surface of the molding roll facing the circumferential surface of the support roll at a predetermined interval; and
pressing the cutting jig against the compound sheet to cut the compound sheet partially and attaching a cut portion to a surface of the removal pad to remove the cut portion away from the compound sheet.
